# EUROPEAN PATENT APPLICATION

(11) **EP 1 681 885 A1**
(43) Date of publication of application: **19.07.2006**
(21) Application number: 06000414.0
(22) Date of filing: 10.01.2006
(51) Int. Cl.: H04Q 7/34

(54) **Apparatus and method for diagnosing problems of a mobile communication terminal**

(30) Priority: 13.01.2005 KR 2005003406
(71) Applicant: LG Electronics Inc., Yongdungpo-Gu Seoul (KR)
(72) Inventor: Kang, Jong-Kook, Bucheon Gyeonggi-Do (KR)
(74) Representative: Katérle, Axel

(57) **Abstract**

A mobile communication terminal that can be used to diagnose problems experienced by the mobile communication terminal is described. The mobile communication terminal includes a converter that converts at least one protocol data unit (PDU) into a format for display, and a display unit that displays the at least one converted PDU.

## Description

### BACKGROUND OF THE INVENTION

### 1. Field of the Invention

The present invention relates to a mobile communication terminal and, more particularly, to an apparatus and method for diagnosing problems of a mobile communication terminal.

### 2. Description of the Related Art

A mobile communication terminal is generally characterized as a device which has mobility, such as a mobile phone, or a personal digital assistant (PDA), for example. A conventional mobile communication terminal typically has a light weight and is small enough to be carried in the hand of a user. However, such a conventional mobile communication terminal generally includes an input unit and a display with limited functionality, and may have a limited range and/or power supply.

Newer model mobile communication terminals are capable of providing diverse services to a user, such as mobile banking (e.g., providing a user with the capability to access the Internet to conduct bank-related transactions such as depositing and withdrawing money), playing mobile games on-line, watching movies, etc. Various types of others products which include features of a mobile phone, a PDA and/or notebook computer are also currently under development.

Mobile communication terminals typically employ various network protocols (such as PPP, IP, TCP, etc.) to implement various applications such as a Web browser or the like. The network protocols are key to the operation of network software, and define the manner in which data is sent from one device to another, such as by defining message types and transmission orders. When a set of network protocols are used together in "layers", the set of protocols is called a protocol stack.

Conventionally, a mobile communication terminal may connect to a personal computer (PC) to transmit or receive data via a communication port such as a UART (Universal Asynchronous Receiver Transmitter) port. The UART, a unit for processing asynchronous serial communication, converts serial bit data into a unit of parallel bit data, and converts a unit of parallel bit data into serial bit data.

Conventionally, when a mobile communication terminal experiences a connection failure, such as a PPP connection failure or the like, a user may debug the mobile communication terminal using a debugging tool provided on a PC. To do this, a user must connect the mobile communication terminal to the PC, such as by connecting a UART port of the mobile communication terminal to a communication port of the PC with an RS-232E cable. The user can then use the debugging tool provided on the PC to check a protocol stack of an application of the mobile communication terminal experiencing problems (such as a Web browser, for example).

However, one of the disadvantages of the conventional method for debugging a mobile communication terminal mentioned above is that a user cannot diagnose problems of the mobile communication terminal without first connecting the mobile communication terminal to another device, such as a PC. When a mobile communication terminal experiences problems, the problems may be caused by an external source, such as a network, rather than by the mobile communication terminal itself. If the problems are not caused by the mobile communication terminal, there is no need to debug the mobile communication terminal. However, a user will be unable to determine whether the mobile communication terminal is the source of the problems until he first connects the mobile communication terminal to a device having a debugging tool.

### SUMMARY OF THE INVENTION

Therefore, an object of the present invention is to provide an apparatus and method for diagnosing problems of a mobile communication terminal which does not require connecting the mobile communication terminal to another device. This is accomplished in part by forming a protocol data unit (PDU) with the mobile communication terminal, converting the PDU into a predetermined format, and displaying the converted PDU on the mobile communication terminal.

To achieve at least the above objects in whole or in part, there is provided a mobile communication terminal used to diagnose problems experienced by the mobile communication terminal, which includes a converter that converts at least one PDU into a format for display, and a display unit that displays the PDU(s). The converter compresses the PDU(s) to convert the PDU(s) into a format for display.

The mobile communication terminal may include a mobile phone or a personal digital assistant. The display unit may include a liquid crystal display.

The mobile communication terminal includes a data port configured to connect the mobile communication terminal to a device capable of debugging the mobile communication terminal. The data port may be configured to connect to an RS-232E cable. The converted PDU(s) correspond to a protocol selected by a user. The mobile communication terminal also includes a controller that controls the converter and the output unit.

To achieve at least these advantages in whole or in parts, there is further provided a method for diagnosing problems experienced by a mobile communication terminal, which includes converting, by the mobile communication terminal, at least one PDU into a format for display, and displaying, by the mobile communication terminal, the converted PDU(s). The method also includes selecting, by a user, a protocol layer of a protocol stack used by the mobile communication terminal, and forming PDU(s) corresponding to the selected protocol layer. Converting the PDU(s) into a format for display includes converting the formed PDU(s) into a format for display.

There is also provided a computer-readable medium which includes a program for diagnosing problems experienced by a mobile communication terminal. The program include instructions for converting at least one PDU into a format for display by a mobile communication terminal, and displaying the converted PDU(s) on a display unit of the mobile communication terminal.

The program also includes instructions for selecting, by a user, a protocol layer of a protocol stack used by the mobile communication terminal, and forming PDU(s) corresponding to the selected protocol layer. The instructions for converting the PDU(s) into a format for display includes instructions for converting the formed PDU(s) into a format for display. The instructions for converting the PDU(s) into a format for display includes instructions for compressing the PDU(s).

The foregoing and other objects, features, aspects and advantages of the present invention will become more apparent from the following detailed description of the present invention when taken in conjunction with the accompanying drawings.

### BRIEF DESCRIPTION OF THE DRAWINGS

The invention will be described in detail with reference to the following drawings in which like reference numerals refer to like elements wherein:
Figure 1 is a block diagram showing a mobile communication terminal in accordance with an embodiment of the present invention;
Figure 2A is a flow chart of a method for diagnosing problems of the mobile communication terminal in accordance with the embodiment of the present invention;
Figure 2B is a flow chart of a method for debugging problems of the mobile communication terminal in accordance with the embodiment of the present invention; and
Figures 3A and 3B illustrate display forms of a PDU in accordance with the embodiment of the present invention.

### DETAILED DESCRIPTION OF THE PREFERRED EMBODIMENTS

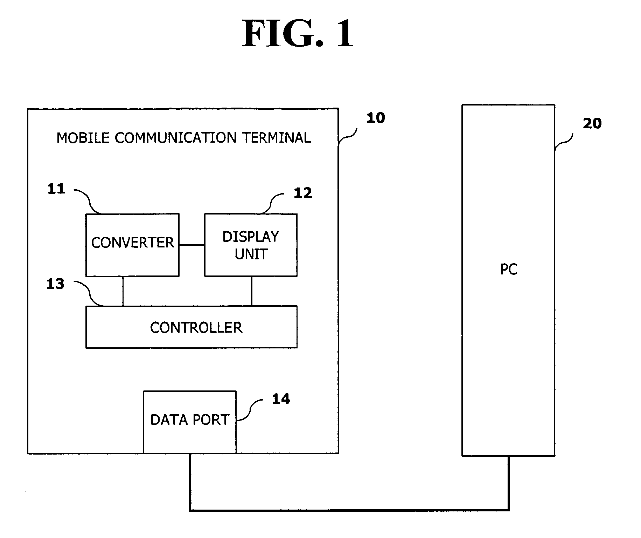

Figure 1 is a block diagram showing a mobile communication terminal used to diagnose problems experienced by the mobile communication terminal in accordance with an embodiment of the present invention.

As shown in Figure 1, a mobile communication terminal 10 includes: a converter 11 that compresses at least one protocol data unit (PDU) and converts the compressed PDU into a predetermined format; a display unit 12 that displays the converted PDU(s); a controller 13 that controls the converter 11 and the display unit 12; and a data port 14, such as, but not limited to, a UART (Universal Asynchronous Receiver Transmitter) port. As an example, the converter 11 can be implemented by a software program installed in the mobile communication terminal 10.

If a user determines, based upon a converted PDU displayed by the display unit 12, that the mobile communication terminal 10 requires debugging, the user may connect the mobile communication terminal 10 to a PC 20 or other device having a debugging tool using the data port 14. By connecting the data port 14 of the mobile communication terminal 10 to a communication port of a PC or other device with a cable, such as, but not limited to, an RS-232E cable, a user can view the PDU displayed by the mobile communication terminal 10 and debug the mobile communication terminal 10 using the debugging tool of the PC 20 or other device.

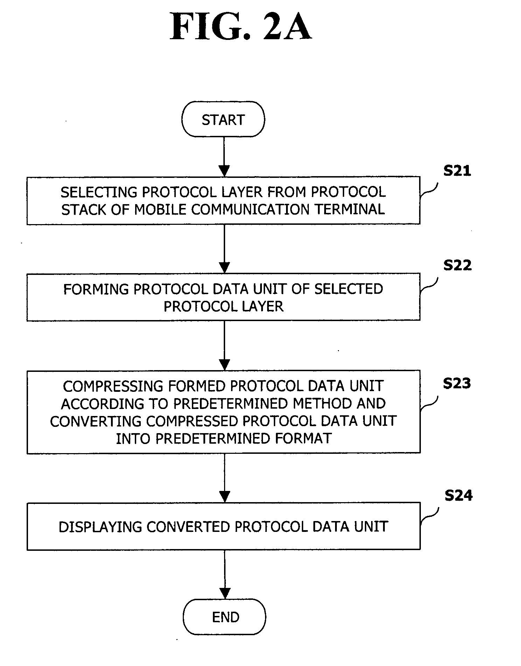

A method for diagnosing problems experienced by the mobile communication terminal constructed as described above will be explained with reference to Figure 2A.

Figure 2A is a flow chart of a method for diagnosing problems experienced by a mobile communication terminal in accordance with an embodiment of the present invention.

As shown in Figure 2A, the method for diagnosing problems experienced by a mobile communication terminal includes: selecting one protocol layer from a protocol stack of a mobile communication terminal (step S21); forming at least one PDU of the selected protocol layer (step S22); compressing the formed PDU(s) according to a predetermined method and converting the compressed PDU(s) into a predetermined format (step S23); and displaying the converted PDU(s) (step S24).

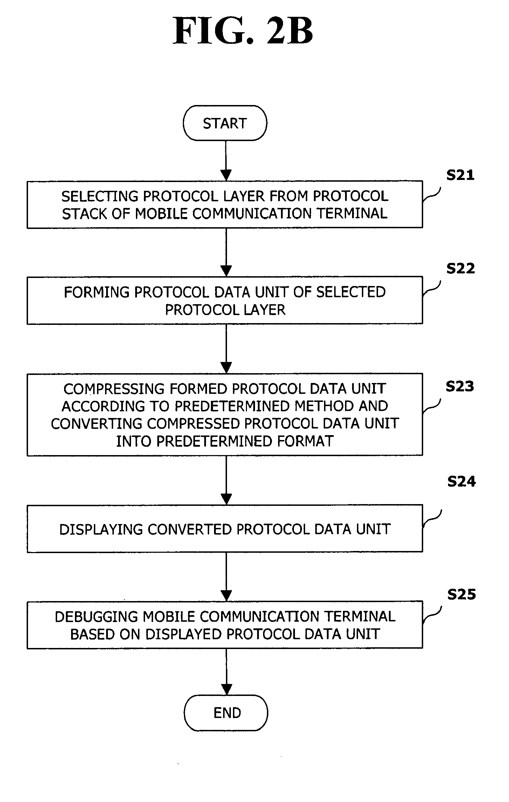

Figure 2B shows a method for debugging problems of the mobile communication terminal. As shown in Figure 2B, the method for debugging includes the method for diagnosing problems shown in Figure 2A, plus an additional step of debugging the mobile communication terminal based on the displayed PDU (step S25).

The method for diagnosing problems experienced by a mobile communication terminal will be described in detail as follows.

The mobile communication terminal 10 in accordance with the present invention is configured to present a screen, hereinafter referred to as an "engineer screen", that displays various parameter values related to the mobile communication terminal 10, upon entry of a predetermined code value.

To troubleshoot problems experienced by the mobile communication terminal 10, from the engineer screen of the mobile communication terminal 10, a user may select a protocol layer from the protocol stack (step S21). When the user selects a protocol layer, the mobile communication terminal 10 forms at least one PDU of the selected protocol layer (step S22). A PDU is a message of a given protocol that carries user information, such as control information, address information, data, etc., which is exchanged between two entities. A PDU includes payload and protocol-specific control information, typically contained in a header.

After forming the PDU(s), the mobile communication terminal 10 compresses the formed PDU(s), and converts the compressed PDU(s) into a predetermined format suitable to be displayed on the display unit 12 of the mobile communication terminal (step S23). Thereafter, the mobile communication terminal 10 displays the converted PDU(s) on the display unit 12 of the mobile communication terminal 10 (step S24). The display unit 12 may include an LCD (Liquid Crystal Display), or any other suitable type of display.

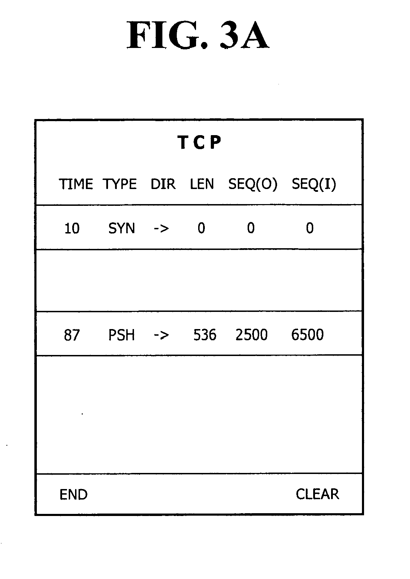

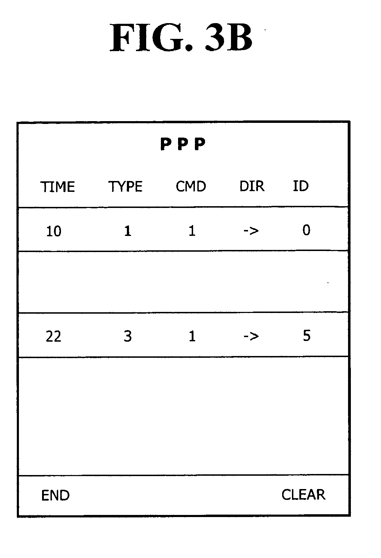

The PDU(s) which are displayed in accordance with an embodiment of the present invention are described below with reference to Figures 3A and 3B.

Figure 3A illustrates a sequence of PDUs of a Transmission Control Protocol (TCP) which are displayed when a user selects the TCP protocol layer from the engineer screen. Figure 3B illustrates a sequence of PDUs of a Point-to-Point Protocol (PPP) which are displayed when a user selects the PPP protocol layer from the engineer screen. As shown in Figures 3A and 3B, the compressed PDUs which are displayed by the mobile communication terminal 10 include only part of the information normally included in a full PDU. The information contained in the compressed, displayed PDUs include the information of a PDU which is most helpful to a user to recognize problems with a protocol layer.

Consequently, by analyzing the displayed PDUs, a user can diagnose a problem occurring in a protocol layer used by the mobile communication terminal 10 and debug the mobile communication terminal 10 based on the diagnosed problem, as shown, for example, in Figure 2B.

Thus, without connecting the mobile communication terminal 10 to a device such as a PC 20 having a debugging tool, the present invention allows a user to easily recognize and diagnose whether a communication problem is caused by a fault of the mobile communication terminal 10, or a fault of an external source, such as the network with which the mobile communication terminal 10 attempts to communicate. If the user determines that the problem is caused by the mobile communication terminal 10, the user may connect the mobile communication terminal 10 to a device having a debugging tool, and use the debugging tool to correct the problem.

The above-described apparatus and method for troubleshooting a mobile communication terminal is implemented such that, to easily troubleshoot problems with a protocol stack used for an application (such as a browser) in the mobile communication terminal without using additional equipment, each PDU of the protocol stack is converted into a predetermined format and outputted on a display unit of the mobile communication terminal.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

In accordance with various embodiments of the present disclosure, the methods described herein may be implemented by software programs stored in a computer-readable medium. The term "computer-readable medium" shall include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is equivalent to a tangible storage medium. Accordingly, the disclosure is considered to include any one or more of a computer-readable medium or a distribution medium and other equivalents and successor media, in which data or instructions may be stored.

Although the present specification describes components and functions that may be implemented in particular embodiments with reference to particular standards, the invention is not limited to such standards. Each of the standards represents examples of the state of the art. Such standards are periodically superseded by faster or more efficient equivalents having essentially the same functions. Accordingly, replacement standards having the same or similar functions are considered equivalents thereof.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The above disclosed subject matter is to be considered illustrative, and not restrictive, and the appended claims are intended to cover all such modifications, enhancements, and other embodiments which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

Although the invention has been described with reference to several exemplary embodiments, it is understood that the words that have been used are words of description and illustration, rather than words of limitation. As the present invention may be embodied in several forms without departing from the spirit or essential characteristics thereof, it should also be understood that the above-described embodiments are not limited by any of the details of the foregoing description, unless otherwise specified. Rather, the above-described embodiments should be construed broadly within the spirit and scope of the present invention as defined in the appended claims. Therefore, changes may be made within the metes and bounds of the appended claims, as presently stated and as amended, without departing from the scope and spirit of the invention in its aspects.

## Claims

1. A mobile communication terminal used for diagnosing problems experienced by the mobile communication terminal, comprising:
a converter that converts at least one protocol data unit (PDU) into a format for display; and
a display unit that displays the at least one converted PDU.

2. The mobile communication terminal according to claim 1, wherein the converter compresses the at least one PDU to convert the at least one PDU into a format for display.

3. The mobile communication terminal according to claim 1, wherein the mobile communication terminal comprises one of a mobile phone and a personal digital assistant.

4. The mobile communication terminal according to claim 1, wherein the display unit comprises a liquid crystal display.

5. The mobile communication terminal according to claim 1, further comprising a data port configured to connect the mobile communication terminal to a device capable of debugging the mobile communication terminal.

6. The mobile communication terminal according to claim 5, wherein the data port is configured to connect to an RS-232E cable.

7. The mobile communication terminal according to claim 1, wherein the at least one converted PDU corresponds to a protocol selected by a user.

8. The mobile communication terminal according to claim 1, further comprising a controller that controls the converter and the display unit.

9. A method for diagnosing problems experienced by a mobile communication terminal, comprising:
converting, by a mobile communication terminal, at least one protocol data unit (PDU) into a format for display; and
displaying, by the mobile communication terminal, the at least one converted PDU.

10. The method according to claim 9, wherein the at least one converted PDU is displayed on a liquid crystal display.

11. The method according to claim 9, wherein the mobile communication terminal is one of a mobile phone and a personal digital assistant.

12. The method according to claim 9, further comprising:
selecting, by a user, a protocol layer of a protocol stack used by the mobile communication terminal; and
forming at least one PDU corresponding to the selected protocol layer,
wherein converting the at least one PDU into a format for display comprises converting the at least one formed PDU into a format for display.

13. The method according to claim 9, wherein converting the at least one PDU into a format for display comprises compressing the at least one PDU.

14. The method according to claim 9, further comprising debugging the mobile communication terminal based on the at least one displayed PDU.

15. A computer-readable medium comprising a program for diagnosing problems experienced by a mobile communication terminal, the program comprising instructions for:
converting at least one protocol data unit (PDU) into a format for display by a mobile communication terminal; and
displaying the at least one converted PDU on a display unit of the mobile communication terminal.

16. The computer-readable medium according to claim 15, wherein the program further comprises instructions for:
selecting, by a user, a protocol layer of a protocol stack used by the mobile communication terminal; and
forming at least one PDU corresponding to the selected protocol layer,
wherein the instructions for converting the at least one PDU into a format for display comprises instructions for converting the at least one formed PDU into a format for display.

17. The computer-readable medium according to claim 15, wherein the instructions for converting the at least one PDU into a format for display comprises instructions for compressing the at least one PDU.
